# FASCICULE DE BREVET EUROPEEN

(11) **EP 0 996 210 B1**
(45) Date de publication et mention de la délivrance du brevet: **23.01.2002**
(21) Numéro de dépôt: 99402539.3
(22) Date de dépôt: 15.10.1999
(51) Int. Cl.: H02G 15/068

(54) **Tête de câble auto-porteuse**
Selbsttragender Kabelkopf
Self-supporting cable head

(30) Priorité: 19.10.1998 FR 9813064
(43) Date de publication de la demande: 26.04.2000
(73) Titulaire: SAGEM SA, 75116 Paris (FR)
(72) Inventeur: Daurelle, Jean-Yves, 77300 Fontainebleau (FR)
(74) Mandataire: Fruchard, Guy

(56) Documents cités:
- EP-A- 0 683 555
- WO-A-97/09762
- WO-A-97/31417
- WO-A-98/45917
- FR-A- 2 590 739
- FR-A- 2 752 107

## Description

La présente invention concerne une tête de câble auto-porteuse pour une extrémité de câble électrique, et plus particulièrement pour assurer le raccordement d'une ligne souterraine à un réseau aérien ou à un appareillage.

On connaît, notamment du document FR-A-2 590 739, une tête de câble auto-porteuse comportant un boîtier étanche en porcelaine formant une structure porteuse pour une extrémité de câble. L'extrémité de câble est montée de façon étanche dans le boîtier qui est lui-même rempli d'un gaz sous pression. On a constaté que lors de l'apparition de défauts électriques tels que des surtensions anormales ou des arcs électriques internes dans la tête de câble, l'échauffement anormal du gaz isolant entraîne une montée en pression de celui-ci et un risque d'explosion du boîtier en porcelaine avec des projections de débris.

On connaît également du document WO 98/45917 une tête de câble auto-porteuse pour une extrémité d'un câble comportant une âme conductrice, une couche isolante entourant l'âme conductrice et un écran conducteur entourant la couche isolante, la couche isolante ayant une extrémité en retrait de l'extrémité de l'âme conductrice et l'écran conducteur ayant une extrémité en retrait de l'extrémité de la couche isolante, la tête de câble comportant un tube porteur s'étendant en regard de l'extrémité du câble au-delà de l'extrémité de l'écran conducteur, un support disposé en regard du tube porteur, un organe répartiteur de champ entourant le tube porteur sur un côté opposé à l'extrémité de l'écran conducteur par rapport au support, une couche isolante intermédiaire entourant la couche isolante du câble au voisinage de l'extrémité de celle-ci ainsi qu'une portion d'extrémité adjacente du tube porteur, et une enveloppe conductrice externe entourant la couche isolante intermédiaire. Toutefois, dans cette tête de câble la couche conductrice externe est réalisée en plusieurs parties qui, tout en se chevauchant selon une direction longitudinale de la tête de câble, sont séparées radialement et ne forment donc pas une enveloppe continue depuis l'extrémité de l'écran conducteur jusqu'à l'organe répartiteur de champ. Dans la tête de câble de ce document, certaines surfaces équipotentielles vont donc présenter des rayons de courbure très faibles voire même des points anguleux qui, les uns comme les autres, sont générateurs de contraintes électriques.

Selon l'invention on propose une tête de câble auto-porteuse du type du document WO 98/45917 caractérisée en ce que l'enveloppe conductrice externe s'étend de façon continue entre des extrémités de celle-ci respectivement reliées à l'extrémité de l'écran conducteur et à l'organe répartiteur de champ.

Ainsi, contrairement au dispositif du document WO 98/45917, les perturbations qui pourraient résulter de la présence du support entre l'extrémité de l'écran conducteur du câble et l'organe répartiteur de champ sont évitées par l'enveloppe conductrice externe qui assure une canalisation des lignes de champ jusqu'à l'organe répartiteur de champ.

D'autres caractéristiques et avantages de l'invention apparaîtront à la lecture de la description qui suit d'un mode de réalisation préféré de l'invention et d'une variante de celui-ci, en référence aux figures ci-jointes parmi lesquelles :
- la figure 1 est une demi-vue en élévation et une demi-vue en coupe selon un plan passant par un axe longitudinal d'une tête de câble auto-porteuse selon le mode de réalisation préféré de l'invention.
- la figure 2 est une vue partielle analogue à celle de la figure 1 d'une variante de réalisation de la tête de câble auto-porteuse selon l'invention.

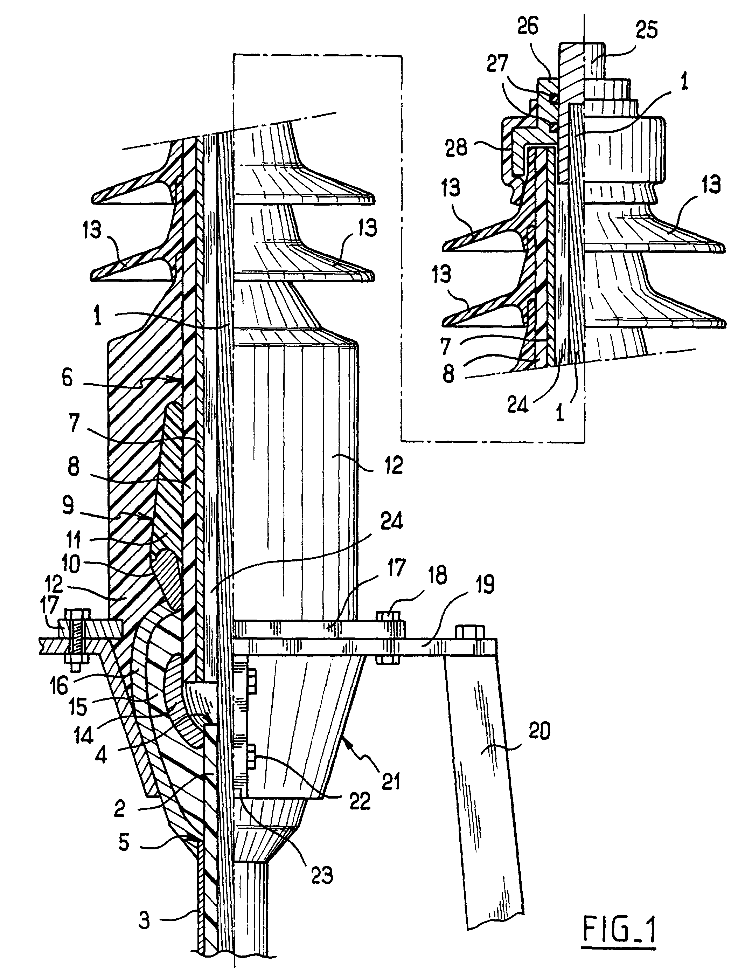

En référence à la figure 1, la tête de câble auto-porteuse selon l'invention est destinée à équiper un câble d'énergie comportant de façon conventionnelle une âme conductrice 1, une couche isolante 2 entourant l'âme conductrice, et un écran conducteur 3 entourant la couche isolante, la couche isolante ayant une extrémité 4 en retrait de l'extrémité de l'âme conductrice et l'écran conducteur ayant une extrémité 5 en retrait de l'extrémité 4 de la couche isolante 2.

Selon l'invention, la tête de câble auto-porteuse comporte un tube porteur 6 comprenant dans le mode de réalisation préféré illustré, un tube conducteur 7, de préférence métallique recouvert d'une couche isolante 8. Le tube porteur s'étend en regard de l'extrémité du câble au-delà de l'extrémité 5 de l'écran conducteur 3.

Un organe répartiteur de champ 9 entoure le tube porteur 6 au voisinage de son extrémité inférieure. Dans le mode de réalisation illustré, l'organe répartiteur de champ 9 comporte de façon connue en soi un déflecteur conique 10 surmonté par un bloc conique 11 en matériau à haute permittivité, l'extrémité inférieure du tube porteur 6 et l'organe répartiteur de champ 9 étant noyés dans un bloc de matière isolante 12 surmonté par des jupes en matière isolante 13 emmanchées sur le tube porteur 6.

L'extrémité 4 de la couche isolante 2 du câble et l'extrémité adjacente du tube porteur 6 sont recouvertes par une enveloppe interne conductrice 14 elle-même recouverte par une couche isolante intermédiaire 15 dont les extrémités sont respectivement en contact d'une part avec la couche isolante 8 du tube porteur 6 et d'autre part avec la couche isolante 2 du câble. La couche isolante intermédiaire 15 est elle-même recouverte par une couche conductrice 16 continue dont l'extrémité inférieure est reliée à l'extrémité 5 de l'écran conducteur 3 du câble en s'étendant à cheval sur cette extrémité, et dont l'extrémité supérieure est reliée au déflecteur 10 de l'organe répartiteur de champ.

Une bague de fixation 17 est encastrée dans le bloc de matière isolante 12 en regard de la partie terminale inférieure du tube porteur 6 et est fixée par des boulons 18 sur une platine 19 portée par des pieds 20 et à laquelle est associée une pièce support conique 21. La platine 19 et la pièce conique 21 sont respectivement formées de deux demi-platines chacune associée à une demi-coquille conique comportant des ailes radiales 23 dont une seule apparaît sur la demi-vue en élévation de la figure 1. Les demi-ensembles support ainsi formés sont associés l'un à l'autre par des boulons 22 s'étendant à travers les ailes 23.

Dans le mode de réalisation illustré, la base du bloc 12 en matière isolante et la partie intermédiaire de l'enveloppe externe 16 sont elles-mêmes de forme conique et sont mises en appui contre la face interne de la pièce conique 21 par la force exercée par les boulons 18 sur la bague support 17. Dans le mode de réalisation préféré illustré, la pièce conique 21 ainsi que la platine 19 et les pieds 20 sont métalliques, de sorte que le support assure simultanément une mise à la terre de l'écran conducteur 3 du câble.

L'enveloppe conductrice interne 14, la couche isolante intermédiaire 15, l'enveloppe conductrice externe 16, l'organe répartiteur de champ 9 et le bloc de matière isolante 12 sont de préférence réalisés par moulages successifs en matière élastomère ou plastomère, le cas échéant chargée de particules conductrices. La matière est choisie en fonction des particularités de la couche concernée. A titre d'exemple la couche conductrice externe 16 qui doit être résistante est de préférence réalisée en polyéthylène réticulé chargé de noir de carbone tandis que le déflecteur 10 qui a généralement une forme complexe est de préférence réalisé en silicone également chargé de noir de carbone. Le tube porteur 6 est initialement associé à un noyau ayant une forme appropriée pour délimiter un conduit interne destiné à recevoir l'extrémité du câble. A ce propos on notera que les mêmes moules peuvent être utilisés pour des câbles de diamètres variés en changeant simplement le noyau initial. Les jupes 13 sont également réalisées de préférence en matière élastomère soit de façon séparée comme illustré, soit en une seule pièce ou encore par moulage direct sur le tube porteur 6.

Lors de la mise en place, l'extrémité du câble est préparée pour dégager l'âme conductrice 1 de la couche isolante 2 et l'écran conducteur 3 sur des longueurs appropriées et une pièce de connexion 25 est fixée à l'extrémité de l'âme conductrice 1, par exemple par sertissage. L'extrémité de câble est engagée dans la cavité interne 24 de la tête de câble jusqu'à ce que la pièce de connexion dépasse à l'extrémité supérieure de celui-ci. Une pièce d'étanchéité 26 comprenant de préférence des joints d'étanchéité 27 est fixée à la pièce de connexion 25 par emmanchement à force, sertissage ou soudage et a une forme appropriée pour recouvrir l'extrémité du tube porteur 6 ainsi que l'extrémité supérieure de la dernière jupe 13. Pour éviter toute pénétration d'eau dans la tête de câble, un manchon thermorétractable 28 est de préférence mis en place à cheval sur la pièce d'étanchéité 26 et la dernière jupe isolante 13.

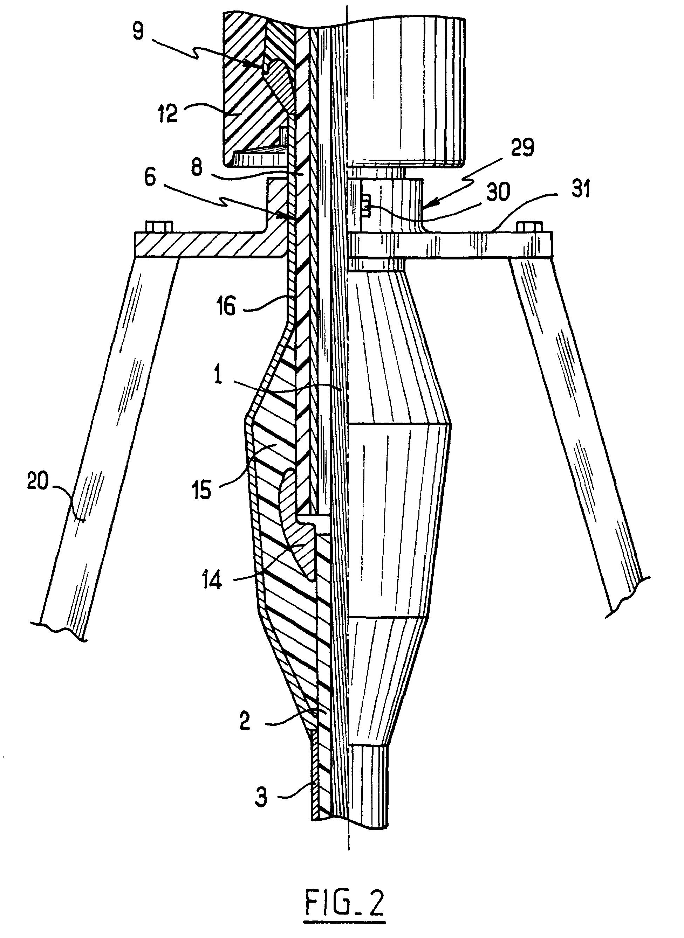

La figure 2 illustre une variante de réalisation dans laquelle les éléments communs au mode de réalisation de la figure 1 ont été désignés par les mêmes références numériques. Dans cette variante de réalisation, l'extrémité inférieure du tube porteur 6 n'est plus immédiatement adjacente à l'organe répartiteur de champ 9 comme dans le premier mode de réalisation mais s'étend au contraire à distance de celui-ci de sorte que l'enveloppe externe conductrice 16 est en contact avec la couche isolante 8 du tube porteur 6 sur une plus grande longueur que dans le mode de réalisation de la figure 1. Le support ne comporte plus une bague encastrée dans le bloc 12 et associée à une pièce support conique mais un manchon support cylindrique 29 constitué comme la pièce conique de demi-coquilles fixées l'une à l'autre par des boulons 30 et associées à une platine 31 formées de deux demi-platines chacune associée à une demi-coquille et portée par des pieds 20 analogues à ceux de la figure 1. Le tube porteur 6 est ainsi enserré dans la partie de celui-ci comprise entre l'organe répartiteur de champ 9 et le bloc comprenant l'enveloppe interne conductrice 14 et la couche isolante intermédiaire 15. En regard du manchon support cylindrique 29 l'enveloppe conductrice 16 est elle-même cylindrique de sorte que les surfaces équipotentielles ont un profil rectiligne minimisant les contraintes électriques.

Bien entendu l'invention n'est pas limitée au mode de réalisation illustré à la figure 1 ou à sa variante de réalisation de la figure 2, mais est susceptible d'autres variantes entrant dans le cadre de l'invention tel que défini par les revendications.

En particulier, bien que le tube porteur selon l'invention ait été illustré sous forme d'un tube métallique recouvert d'une couche isolante formant une cage de Faraday autour de l'âme conductrice, on pourra prévoir un tube porteur en matière totalement isolante à condition que celle-ci soit suffisamment résistante mécaniquement pour supporter les contraintes auxquelles la tête de câble est soumise lors de sa mise en place ou son fonctionnement et à condition que le tube porteur soit en contact intime avec l'âme conductrice ou avec un matériau recouvrant celle-ci. La cage de Faraday mentionnée ci-dessus peut également être réalisée par un revêtement conducteur, métallique ou polymère, à l'intérieur d'un tube porteur en matière isolante.

Bien que le tube porteur ait été illustré dans un mode de réalisation où il s'étend seulement en regard de l'âme conductrice dénudée, le tube porteur peut également chevaucher la couche isolante du câble. Dans ce cas, il peut être envisagé de supprimer l'enveloppe conductrice interne 14 qui a pour fonction de masquer électriquement les irrégularités de configuration (arêtes à l'extrémité d'une couche, bulles d'air..) qui sont génératrices de contraintes électriques.

Bien entendu le support de la tête de câble pourra avoir toute structure adaptée à la structure de la tête de câble ou aux conditions d'utilisation de celle-ci. En particulier dans le cas d'une pièce de connexion 25 ayant un diamètre supérieur au diamètre interne du tube porteur, on pourra prévoir de fixer celle-ci à l'âme conductrice après engagement de l'âme conductrice dans la tête de câble.

Dans le cas où il n'est pas certain que la pièce d'étanchéité 26 soit suffisante pour empêcher une pénétration d'eau dans la tête de câble on peut prévoir de remplir l'espace entre le tube porteur et l'extrémité du câble avec un matériau d'étanchéité tel qu'une graisse silicone.

## Revendications

1. Tête de câble auto-porteuse pour une extrémité d'un câble comportant une âme conductrice (1), une couche isolante (2) entourant l'âme conductrice et un écran conducteur (3) entourant la couche isolante, la couche isolante ayant une extrémité (4) en retrait de l'extrémité de l'âme conductrice et l'écran conducteur ayant une extrémité (5) en retrait de l'extrémité de la couche isolante, la tête de câble comportant un tube porteur (6) s'étendant en regard de l'extrémité du câble au-delà de l'extrémité de l'écran conducteur, un support (17, 19, 20) disposé en regard du tube porteur (6), un organe répartiteur de champ (9) entourant le tube porteur (6) sur un côté opposé à l'extrémité (5) de l'écran conducteur par rapport au support, une couche isolante intermédiaire (15) entourant la couche isolante du câble au voisinage de l'extrémité de celle-ci ainsi qu'une portion d'extrémité adjacente du tube porteur, et une enveloppe conductrice externe (16) entourant la couche isolante intermédiaire (15) **caractérisée en ce que** l'enveloppe conductrice (16) externe s'étend de façon continue entre des extrémités de celle-ci respectivement reliées à l'extrémité (5) de l'écran conducteur (3) et à l'organe répartiteur de champ (9).

2. Tête de câble auto-porteuse selon la revendication 1, **caractérisée en ce qu'**elle comporte une enveloppe conductrice interne (14) s'étendant à l'intérieur de la couche isolante intermédiaire (15) et ayant des extrémités recouvrant respectivement l'extrémité (4) de la couche isolante (2) du câble et l'extrémité adjacente du tube porteur (6).

3. Tête de câble auto-porteuse selon la revendication 1 ou la revendication 2, **caractérisée en ce que** le support est conducteur et est en contact avec l'enveloppe conductrice externe (16).

4. Tête de câble auto-porteuse selon la revendication 3, **caractérisée en ce que** le support comporte une pièce conique (21) associée à une platine (19) portée par des pieds (20), et une bague (17) encastrée dans un bloc entourant le tube porteur et fixé à la platine (19).

5. Tête de câble auto-porteuse selon la revendication 4, **caractérisée en ce que** la pièce conique comporte deux demi-coquilles associées à des demi-platines et fixées l'une à l'autre.

6. Tête de câble auto-porteuse selon l'une des revendications 1 à 5, **caractérisée en ce que** le tube porteur comporte une couche interne conductrice et une couche externe isolante.

7. Tête de câble auto-porteuse selon la revendication 6, **caractérisée en ce que** le tube porteur (6) comporte un tube métallique (7) recouvert d'une couche isolante (8).

8. Tête de câble auto-porteuse selon l'une des revendications 1 à 7, **caractérisée en ce qu'**elle comporte une pièce de connexion (25) fixée à l'extrémité de l'âme conductrice (1) et une pièce d'étanchéité (26) fixée à la pièce de connexion (25) et recouvrant l'extrémité adjacente du tube porteur (6).

9. Tête de câble auto-porteuse selon l'une des revendications 1 à 3, **caractérisée en ce que** le support comporte un manchon cylindrique (29) enserrant le tube porteur (6) et associé à une platine (31) portée par des pieds (20).

10. Tête de câble auto-porteuse selon la revendication 8, **caractérisée en ce que** le manchon cylindrique (29) comporte deux demi-coquilles associées à des demi-platines et fixées l'une à l'autre.

## Claims

1. A self-supporting cable head for the end of a cable comprising a conductive core (1), an insulating layer (2) surrounding the conductive core, and a conductive screen (3) surrounding the insulating layer, the insulating layer having an end (4) set back from the end of the conductive core, and the conductive screen having an end (5) set back from the end of the insulating layer, the cable head comprising a carrier tube (6) extending in register with the end of the cable beyond the end of the conductive screen, a support (17, 19, 20) disposed in register with the carrier tube (6), a field distributor member (9) surrounding the carrier tube (6) on a side of the support that is opposite from its side adjacent to the end (5) of the conductive screen, an intermediate insulating layer (15) surrounded the insulating layer of the cable in the vicinity of the end thereof together with an adjacent end portion of the carrier tube, and an outer conductive envelope (16) surrounding the intermediate insulating layer (15), the cable head being **characterized in that** the outer conductive envelope (16) extends continuously between the ends thereof that are connected respectively to the end (5) of the conductive screen (3) and to the field distributor member (9).

2. A self-supporting cable head according to claim 1, **characterized in that** it comprises an inner conductive envelope (14) extending inside the intermediate insulating layer (15) and having ends covering respectively the end (4) of the insulating layer (2) of the cable and the adjacent end of the carrier tube (6).

3. A self-supporting cable head according to claim 1 or claim 2, **characterized in that** the support is conductive and is in contact with the outer conductive envelope (16).

4. A self-supporting cable head according to claim 3, **characterized in that** the support comprises a conical piece (21) associated with a plate (19) carried by legs (20), together with a ring (17) engaged in a block surrounding the carrier tube and fixed to the plate (19).

5. A self-supporting cable head according to claim 4, **characterized in that** the conical piece comprises two half-shells associated with half-plates and fixed together.

6. A self-supporting cable head according to any one of claims 1 to 5, **characterized in that** the carrier tube comprises a conductive inner layer and an insulating outer layer.

7. A self-supporting cable head according to claim 6, **characterized in that** the carrier tube (6) comprises a metal tube (7) covered in an insulating layer (8).

8. A self-supporting cable head according to any one of claims 1 to 7, **characterized in that** it comprises a connection piece (25) fixed to the end of the conductive core (1) and a sealing piece (26) fixed to the connection piece (25) and covering the adjacent end of the carrier tube (6).

9. A self-supporting cable head according to any one of clams 1 to 3, **characterized in that** the support comprises a cylindrical sleeve (29) clamped onto the carrier tube (6) and associated with a plate (31) carried by legs (20).

10. A self-supporting cable head according to claim 8, **characterized in that** the cylindrical sleeve (29) comprises two half-shells associated with half-plates and fixed to each other.

## Patentansprüche

1. Selbsttragender Kabelkopf für ein Ende eines Kabels mit einer Kabelseele (1), einer Isolierschicht (2), welche die Kabelseele umgibt, und einer leitenden Abschirmung (3), welche die Isolierschicht umgibt, wobei diese ein Ende (4) hat, das gegenüber dem Ende der Kabelseele zurück liegt und die leitende Abschirmung ein Ende (5) hat, das gegenüber dem Ende der Isolierschicht zurück liegt und wobei der Kabelkopf ein Trägerohr (6) hat, das sich gegenüber dem Kabelende über das Ende der leitenden Abschirmung hinaus erstreckt, sowie eine Halterung (17, 19, 20), die gegenüber dem Trägerrohr (6) angeordnet ist, ein Feldverteilerelement (9), das das Trägerrohr (6) auf einer dem Ende (5) der leitenden Abschirmung - relativ zur Halterung - abgewandten Seite umgibt, eine isolierende Zwischenschicht (15), welche die Isolierschicht des Kabels nahe dem Ende dieser Isolierschicht sowie einen benachbarten Endabschnitt des Trägerrohrs umgibt, und eine äußere leitfähige Hülle (16) hat, welche die isolierende Zwischenschicht(15) umgibt, **dadurch gekennzeichnet, daß** sich die äußere leitfähige Hülle (16) durchgehend zwischen Ihren Enden erstreckt, die mit dem Ende (5) der leitenden Abschirmung (3) bzw. mit dem Feldverteilerelement (9) verbunden sind.

2. Selbsttragender Kabelkopf nach Anspruch 1, **dadurch gekennzeichnet, daß** er eine innere leitfähige Hülle (14) umfaßt, die sich im Innern der isolierenden Zwischenschicht (15) erstreckt und deren Enden das Ende (4) der Isolierschicht (2) des Kabels bzw. das angrenzende Ende des Trägerrohres (6) abdecken.

3. Selbsttragender Kabelkopf nach Anspruch 1 oder 2, **dadurch gekennzeichnet, daß** die Halterung leitend ist und die äußere leitfähige Hülle (16) berührt.

4. Selbsttragender Kabelkopf nach Anspruch 3, **dadurch gekennzeichnet, daß** die Halterung ein konisches Element (21), das mit einer Platte (19) verbunden ist, die von Füßen (20) getragen wird, und einen Ring (17) hat, der in einem das Trägerrohr umgebenden und mit der Platte (19) verbundenen Block eingelassen ist.

5. Selbsttragender Kabelkopf nach Anspruch 4, **dadurch gekennzeichnet, daß** das konische Element aus zwei Halbschalen besteht, die mit Plattenhälften verbunden und aneinander befestigt sind.

6. Selbsttragender Kabelkopf nach einem der Ansprüche 1 bis 5, **dadurch gekennzeichnet, daß** das Trägerrohr eine innere Leitschicht und eine äußere Isolierschicht hat.

7. Selbsttragender Kabelkopf nach Anspruch 6, **dadurch gekennzeichnet, daß** das Trägerrohr (6) ein Metallrohr (7) hat, das von einer Isolierschicht (8) umgeben ist.

8. Selbsttragender Kabelkopf nach einem der Ansprüche 1 bis 7, **dadurch gekennzeichnet, daß** er ein Verbindungsstück (25), das an dem Ende der Kabelseele (1) befestigt ist, und ein Dichtungselement (26) hat, das an dem Verbindungsstück (25) befestigt ist und das benachbarte Ende des Trägerrohrs (6) abdeckt.

9. Selbsttragender Kabelkopf nach einem der Ansprüche 1 bis 3, **dadurch gekennzeichnet, daß** die Halterung eine zylindrische Muffe (29) umfaßt, welche das Trägerrohr (6) umspannt und mit einer von Füßen (20) getragenen Platte (31) verbunden ist.

10. Selbsttragender Kabelkopf nach Anspruch 8, **dadurch gekennzeichnet, daß** die zylindrische Muffe (29) aus zwei Halbschalen besteht, die mit Plattenhälften verbunden und aneinander befestigt sind.
